# EUROPEAN PATENT APPLICATION

(11) **EP 2 703 370 A1**
(43) Date of publication of application: **05.03.2014**
(21) Application number: 12182819.8
(22) Date of filing: 03.09.2012
(51) Int. Cl.: C04B 18/08, C04B 28/02, C10J 3/08

(54) **Gasification process**

(71) Applicant: Shell Internationale Research Maatschappij B.V., 2596 HR The Hague (NL)
(72) Inventor: Janssen, Albert Joseph Hendrik, 2288 GS Rijswijk (NL)
(74) Representative: Matthezing, Robert Maarten

(57) **Abstract**

Process for the production of syngas by partial combustion of a carbonaceous feed. Fly ash is removed from produced syngas and subsequently mixed into water, waste water from the partial combustion process, to form a fly ash slurry. The water can be allowed to evaporate from the fly ash slurry, e.g., to form dry bricks. For example, an amount of 0.3 - 0.4 m³ water can be mixed per 1000 kg fly ash.

## Description

### FIELD OF INVENTION

The present invention relates to a process of gasification of a carbonaceous feed, and more particularly to treating a waste stream of fly ash produced in such a gasification process.

### BACKGROUND

In gasification processes a carbonaceous feed, such as coal or petroleum, is partially combusted to produce synthesis gas, also referred to as syngas. Fly ash and slag containing waste water are generated as waste streams. Fly ash needs to be removed from the produced synthesis gas, e.g., by filtration or electrostatic precipitators. Since the particles solidify while suspended in the exhaust gases, fly ash particles are generally spherical. The average particle sizes typically range from 0.5 µm to 100 µm. Fly ash mainly comprises amorphous and crystalline silicon dioxide (Si02), aluminium oxide (Al2O3) and iron oxide (Fe203). Due to the high processing temperatures, fly ash originating from syngas production has very low carbon contents.

Due to the very fine particle sizes of fly ash, open air storage would cause a risk of formation of dust clouds. These dust clouds form an environmental hazard and a serious health risk due to their potential carcinogenic content.

It is an object of the invention to improve the manageability of waste streams and to reduce environmental and health risks involved with the production of syngas by partial combustion.

The object of the invention is achieved with a process for the production of syngas by partial combustion of a carbonaceous feed, wherein fly ash is removed from produced syngas and subsequently mixed with water to form a fly ash slurry. The slurry is more easy to handle than fugitive dry fly ash dust. No dust clouds can be formed.

The slurry can subsequently be solidified. The solidified slurry forms a solid cake, which can be easily stored, for instance as bricks or the like.

In a specific embodiment, at least 0.2 m³ water is mixed per 1000 kg fly ash. This results in a slurry with sufficient wetting of all the contained fly ash. The resulting slurry can be solidified within an acceptable processing time. Particularly good results are obtained if 0.3 - 0.4 m³ water is mixed per 1000 kg fly ash.

Water to be mixed with the fly ash can for example be waste water from the gasification process, optionally mixed with water from a different source. This waste water is water used for collecting slag formed in the gasifier.

Higher sodium chloride contents in the water tend to result in formation of cracks after solidification of the slurry. To reduce the risk of crack formation water can be used with a low content of sodium chloride, e.g., below 0,5 g/l.

Due to the low carbon content of fly ash originating from syngas production, bricks of solidified fly ash slurries are surprisingly more useful, e.g., as a road fill material, than bricks of comparable materials. The fly ash does not need to be mixed with sand, stone dust, lime, gypsum and/or cement to provide a useful binder or brick material.

### Example

Fly ash was collected from a stream of syngas from a gasifier.

The fly-ash was mixed with water substantially without NaCL and with two aqueous NaCl solutions in different ratios to determine the required minimum amount of water needed to provide a safely storable fly ash compound.

Fly ash samples were mixed with water of varying NaCl concentrates in different mixing ratios, as shown in Table 1.

**Table 3: Mixing ratio of fly ash with water.**

| Solution | Fly ash: water | Fly ash: water | Fly ash: water | Fly ash: water | Fly ash: water |
|---|---|---|---|---|---|
| Water | 5:1 | 5:2 | 5:3 | 5:4 | 1:1 |
| 50 g/l NaCl | 5:1 | 5:1.5 | 5:2 | 5:3 | 5:4 |
| 100 g/l NaCl | 5:1 | 5:1.5 | 5:2 | 5:3 | 5:4 |

Each water/fly-ash mixture was put onto a Petri-dish where it was left to solidify at room temperature. After 24 hours the consistency of the material was tested by gently hitting with a spatula on the solidified water/fly-ash mixture. The samples were then left for another few weeks to test crack formation.

It was found that that the higher the NaCl concentration, the wetter the water/fly ash mixture remains, also after 48 hours. After solidification the samples with the 100 g/l NaCl concentration contain salt crystals on top of the Petri dish.

It was found that a fly ash to water ratio of 5: 1 results in good wetting of the fly ash. The mixture becomes slurry-like after mixing and solidifies rapidly. After several weeks of drying, the material does have some cracks and can be broken easily. However, it does not become dust-like.

## Claims

1. Process for the production of syngas by partial combustion of a carbonaceous feed, wherein fly ash is removed from produced syngas and subsequently mixed into water to form a fly ash slurry.

2. Process according to claim 1 wherein subsequently, at least part of the water is allowed to evaporate from the fly ash slurry.

3. Process according to claim 1 or 2 wherein at least 0.2 m³ water is mixed per 1000 kg fly ash.

4. Process according to claim 3 wherein at least 0.3 - 0.4 m³ water is mixed per 1000 kg fly ash.

5. Process according to any one of the preceding claims wherein the water to be mixed with the fly ash is waste water from the gasification process.

6. Process for treatment of fly ash by mixing at least 0.2 m³ water per 1000 kg fly ash and by subsequent evaporation of water.

7. Process according to claim 6 wherein 0.3 - 0.4 m³ water is mixed per 1000 kg fly ash.

8. Brick of a dehydrated fly ash slurry obtainable by a process of any one of the preceding claims.
